# EUROPÄISCHE PATENTSCHRIFT

(11) **EP 2 465 635 B1**
(45) Veröffentlichungstag und Bekanntmachung des Hinweises auf die Patenterteilung: **02.04.2014**
(21) Anmeldenummer: 11186454.2
(22) Anmeldetag: 25.10.2011
(51) Int. Cl.: B23K 26/08, B23K 26/28

(54) **Verfahren und Vorrichtung zum Erzeugen einer Laserschweißnaht**
Method and device for creating a laser-welded seam
Procédé et dispositif destinés à la production d'un cordon de soudure au laser

(30) Priorität: 17.12.2010 DE 102010063415
(43) Veröffentlichungstag der Anmeldung: 20.06.2012
(73) Patentinhaber: Robert Bosch GmbH, 70442 Stuttgart (DE)
(72) Erfinder: Matic, Mario, 70825 Korntal-Muenchingen (DE)

(56) Entgegenhaltungen:
- EP-A2- 2 316 606
- WO-A2-2008/002508
- GB-A- 1 543 049
- US-A- 4 224 499
- US-A1- 2006 054 611

## Beschreibung

Die Erfindung betrifft ein Verfahren zum Erzeugen einer Laserschweißnaht nach dem Oberbegriff des Anspruchs 1. Ferner betrifft die Erfindung eine Vorrichtung zum Erzeugen einer Laserschweißnaht.

Ein derartiges Verfahren ist aus der WO2008/002508 A2 bekannt. Mittels des bekannten Verfahrens werden zwei schalenförmige Halbkugeln miteinander verschweißt, wobei auf die beiden Halbkugeln während des Verschweißens eine Axialkraft ausgeübt wird. Insbesondere, wenn die Kraft bereits während des Erwärmens der Schweißnaht auf die Bauteile ausgeübt wird, besteht dabei die Gefahr, dass infolge der Axialkraft verflüssigtes Material aus dem Bereich der Erhitzungszone ausgetrieben wird bzw. herausspritzt, so dass die Qualität der Nahtstelle bzw. der Bauteile beeinträchtigt wird.

Darüber hinaus ist es aus der DE 10 2008 040 777 A1 der Anmelderin bekannt, die Form der Schweißnaht derart zugestalten, dass der sogenannte Endgradabschnitt, das ist der Bereich, in dem Schweißnaht einen Überlappungsbereich aufweist, zumindest abschnittsweise außerhalb des Funktionsabschnitts der Schweißnaht angeordnet ist. Eine derartige geometrische Gestaltung einer Schweißnaht ist zwar aus funktioneller Sicht ggf. zufriedenstellend, hat jedoch optische Nachteile insbesondere bei solchen Schweißnähten, die von außen optisch erkennbar sind. Darüber hinaus muss eine spezielle Bewegung zwischen dem Laserstrahl und dem bzw. den Bauteilen erzeugt werden, um die gewünschte Form der Schweißnaht zu erzeugen. Weiterhin ist es als nachteilhaft anzusehen, dass mittels des vorbekannten Verfahrens zwar die Rissbildung im Bereich des Endkraterabschnitts gegenüber konventionellen Verfahren reduziert wird, dass generell die Rissneigung über die Umfangslänge der Schweißnaht dadurch jedoch nicht beeinflusst wird.

Hierzu ist es anzumerken, dass bei Rissen in Schweißnähten zwischen der sogenannten Heißrissbildung und der Kaltrissbildung zu unterscheiden ist. Die vorliegende Erfindung befasst sich dabei mit der Problematik der Heißrissbildung, die ihre Ursache nach derzeit geltender Meinung in den hochkomplexen Wechselwirkungen metallurgischer und mechanischer Faktoren hat. Insbesondere entstehen Heißrisse durch Entmischungsvorgänge im Laufe des Erstarrungsprozesses der Schweißnaht. Legierungs- und Begleitelemente der verwendeten Werkstoffe der Bauteile reichern sich während des Erstarrungsprozesses in der Restschmelze an und bilden niedrigschmelzende Phasen aus. Damit verbunden ist eine lokale Veränderung der physikalischen Eigenschaften (unter anderem der Erstarrungstemperatur) des verbleibenden, noch nicht vollständig erstarrten Schweißgutes. Thermisch induzierte Spannungen und Dehnungen, z.B. Schrumpfungen, verursachen die Entstehung von feinen, interdentritischen Hohlräumen im Schweißgut, welche durch die noch vorhandene Restschmelze aufgrund ihrer zu hohen Viskosität nicht mehr aufgefüllt werden können. Diese so entstehenden Fehlstellen werden als Heißrisse bezeichnet.

Aus dem Stand der Technik sind daher weiterhin bereits empirisch ermittelte Methoden zur Vermeidung der beschriebenen Heißrisse bekannt. Diese bestehen beispielsweise in einem lokalen oder globalen Vor- oder Nachwärmen des bzw. der zu bearbeitenden Bauteile, einer Verringerung des Wärmeeintrages bei gleichbleibender Einschweißtiefe durch eine relativ hohe Schweißgeschwindigkeit, einer Veränderung der Fokuslage des Laserstrahls, einer gleichzeitigen Verwendung von mehreren Wärmequellen, einem Einbringen von Zusatzwerkstoffen in Draht- oder Folienform oder durch eine gezielte Werkstoffauswahl durch Einschränkung der Legierungszusammensetzung, beispielsweise durch eine Reduktion von chemischen Begleitelementen wie Schwefel, Phosphor oder ähnlichem. All diese Maßnahmen haben mehr oder minder große Nachteile, sind relativ aufwendig auszuführen, oder schränken die Werkstoffauswahl ein.

### Offenbarung der Erfindung

Ausgehend von dem dargestellten Stand der Technik liegt der Erfindung die Aufgabe zugrunde, ein Verfahren zum Erzeugen einer Laserschweißnaht nach dem Oberbegriff des Anspruchs 1 derart weiterzubilden, dass bei hoher Schweißnahtqualität, das heißt unter Vermeidung der angesprochenen Heißrisse, beim Aufschmelzen des Materials in der Fügezone kein verflüssigtes Material aus der Fügezone herausgequetscht bzw. herausgeschleudert wird. Diese Aufgabe wird erfindungsgemäß bei einem Verfahren mit den Merkmalen des Anspruchs 1 dadurch gelöst, dass die Druckkraft auf die Bauteile maximal in einem Zeitraum erfolgt, der zwischen dem vollständigen Aufschmelzen des Materials der beiden Bauteile in der Fügezone und dessen Erstarrung, insbesondere vorzugsweise unmittelbar vor der Erstarrung, wirkt.

Vorteilhafte Weiterbildungen des erfindungsgemäßen Verfahrens zum Erzeugen einer Laserschweißnaht sind in den Unteransprüchen angegeben.

Ganz besonders bevorzugt ist es, wenn die Druckkraft bei einer Temperatur der Schweißnaht nahe der Solidustemperatur der Schweißnaht erzeugt wird. Dadurch ist sichergestellt, dass die zur Reduzierung bzw. Vermeidung der Risse erforderlichen Spannungen in dem gewünschten Zeitraum erzeugt werden.

Ganz besonders bevorzugt ist es weiterhin, wenn das Einbringen der Druckkraft nach dem Abschalten des Laserstrahls erfolgt. Dadurch kann die angesprochene Neigung zum Verdrängen von verflüssigtem Schweißgut aus der Fügezone minimiert werden.

Bevorzugt findet das erfindungsgemäße Verfahren Verwendung bei Bauteilen, die zumindest in der Fügezone rotationssymmetrisch ausgebildet sind, wobei eine Relativbewegung zwischen dem Laserstrahl und den Bauteilen in der Fügezone erzeugt wird. Dadurch wird ein gleichmäßiger Wärmeeintrag in die Fügezone begünstigt, was wiederum auch eine gleichmäßige Abkühlung bzw. eine gleichmäßige Erstarrung des verflüssigten Materials in der Fügezone ermöglicht. Dadurch werden insbesondere einseitig wirkende Biegespannungen auf die Bauteile in der Fügezone bzw. die Ausbildung von schräg zueinander angeordneten Bauteilen nach der Erstarrung vermieden.

Die Erfindung umfasst auch eine Vorrichtung zum Durchführen des erfindungsgemäßen Verfahrens, wobei eine Einrichtung zur Erzeugung einer Druckkraft in einer Ebene senkrecht zur Fügezone der beiden Bauteile vorgesehen ist.

Besonders bevorzugt ist es, wenn eine Dreheinrichtung für die beiden Bauteile vorgesehen ist, die die beiden Bauteile in einer Achse senkrecht zur Fügezone dreht. Eine derartige Dreheinrichtung ist relativ einfach herstellbar und deren Drehung bzw. Rotation lässt sich relativ einfach steuern bzw. regeln.

In einer besonders bevorzugten konstruktiven Ausgestaltung der Erfindung ist es vorgesehen, dass die Einrichtung zur Erzeugung der Druckkraft wenigstens eines der beiden Bauteile auf der der Fügezone abgewandten Seite der Bauteile mit der Druckkraft beaufschlagt. Dadurch lässt sich ein besonders einfacher Aufbau einer Fertigungseinrichtung erzielen, bei der die Spanneinrichtungen axial nicht abgestützt werden müssen.

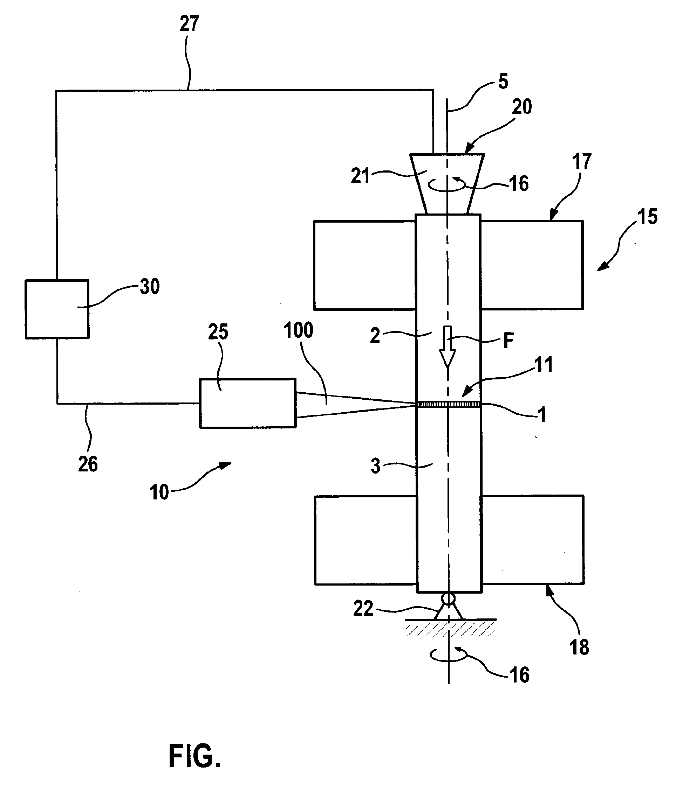

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in der einzigen Figur eine stark vereinfachte Darstellung einer Vorrichtung zum Erzeugen einer Laserschweißnaht unter Verwendung eines erfindungsgemäßen Verfahrens in einer Seitenansicht.

In der einzigen Figur ist stark vereinfacht eine Vorrichtung 10 zur Erzeugung einer Laserschweißnaht 1 im Bereich einer Fügezone 11 zweier Bauteile 2, 3 dargestellt. Bei den Bauteilen 2, 3 handelt es sich vorzugsweise, jedoch nicht einschränkend, um zwei zylindrisch bzw. rotationssymmetrisch ausgebildete Bauteile 2, 3, die in einer gemeinsamen Längsachse 5 zueinander ausgerichtet sind, wobei die Fügezone 11 der beiden Bauteile 2, 3 an den einander zugewandten Stirnflächen der Bauteile 2, 3 verläuft. Beispielhaft, jedoch nicht einschränkend, handelt es sich bei den Bauteilen 2, 3 um Bauteile 2, 3, wie sie bei Kraftstoffeinspritzsystemen bei Injektoren verwendet werden, z.B. um Bauteile einer Düsennadel oder ähnlichem.

Die Vorrichtung 10 weist eine Dreheinrichtung 15 mit einem nicht näher dargestellten Antrieb auf, der die beiden Bauteile 2, 3 um deren gemeinsame Längsachse 5 in Richtung der Pfeile 16 im Uhrzeigersinn oder im Gegenuhrzeigersinn, insbesondere kontinuierlich, dreht. Die Dreheinrichtung 15 umfasst weiterhin für jedes der beiden Bauteile 2, 3 ein Spannmittel 17, 18 in Form einer Spannbacke oder ähnlichem, das das jeweilige Bauteil 2, 3 im Ausführungsbeispiel am Au-βenumfang des jeweiligen Bauteils 2, 3 umfasst bzw. fixiert.

Erfindungsgemäß ist es vorgesehen, dass die beiden Bauteile 2, 3 mit einer Einrichtung 20 zum Erzeugen einer Druckkraft F zusammenwirken, wobei die Druckkraft F in Form einer Axialkraft zumindest nahezu im Wesentlichen in Richtung der Längsachse 5 der beiden Bauteile 2, 3 wirkt. Die Einrichtung 20 zum Erzeugen der Druckkraft F weist einen Druckkopf 21 zur Erzeugung der Druckkraft F auf das eine Bauteil 2 auf, wobei der Druckkopf 21 auf der der Fügezone 11 abgewandten Seite des Bauteils 2 auf das Bauteil 2 wirkt. Das andere Bauteil 3 ist auf der der Fügezone 11 gegenüberliegenden Seite mittels eines Lagers 22 axial abgestützt, jedoch drehbar gelagert.

In Abänderung des beschriebenen Sachverhalts ist es auch möglich bzw. denkbar, dass die Einrichtung 20 zum Erzeugen der Druckkraft F integraler Bestandteil der Dreheinrichtung 15 ist, indem beispielsweise das eine Spannmittel 17 mit einer entsprechenden Axialkraft F beaufschlagt wird, während das andere Spannmittel 18 in axialer Richtung abgestützt ist.

Die Vorrichtung 10 umfasst weiterhin eine Laserstrahleinrichtung 25 zur Erzeugung eines Laserstrahls 100, wobei der Laserstrahl 100 senkrecht zur Längsachse 5 der beiden Bauteile 2, 3 und senkrecht zur Richtung der Druckkraft F ausgerichtet ist. Mittels des Laserstrahls 100 wird das Material der beiden Bauteile 2, 3 in der Fügezone 11 bis auf eine Temperatur erhitzt, die oberhalb der Schmelztemperatur des Materials der beiden Bauteile 2, 3 liegt. Insbesondere ist es dabei vorzugsweise vorgesehen, dass das Erwärmen des Materials im Bereich der Fügezone 11, das heißt in der Richtung, aus der der Laserstrahl 100 auf die beiden Bauteile 2, 3 auftrifft, über die gesamte Querschnittsfläche der beiden Bauteile 2, 3 erfolgt.

In Abänderung des dargestellten Ausführungsbeispiels, bei der die beiden Bauteile 2, 3 unter Ausbildung einer Stumpfnaht miteinander verbunden werden, ist es selbstverständlich auch möglich, Bauteile 2, 3 unter Ausbildung einer Kehlnaht miteinander zu verbinden. In diesem Fall ist der Laserstrahl 100 selbstverständlich nicht senkrecht zu der Längsachse 5 der Bauteile 2, 3 bzw. zur Druckkraft F angeordnet, sondern unter einem Winkel.

Die Laserstrahleinrichtung 25 ist über eine Leitung 26 mit einer Steuereinrichtung 30 der Vorrichtung 10 verbunden. Die Steuereinrichtung 30 steuert dabei die Laserstrahleinrichtung 25 an. Über eine weitere Leitung 27 ist zumindest die Einrichtung 20 zur Erzeugung der Druckkraft F ebenfalls mit der Steuereinrichtung 30 verbunden.

Die soweit beschriebene Vorrichtung 10 arbeitet wie folgt: Zunächst werden die beiden Bauteile 2, 3 in die Spannmittel 17, 18 der Dreheinrichtung 15 eingespannt, derart, dass deren zugewandte Stirnflächen einander berühren. Dann steuert die Steuereinrichtung 30 der Vorrichtung 10 die Dreheinrichtung 15 derart an, dass sich die Bauteile 2, 3 entsprechend des Pfeils 16 drehen. Gleichzeitig wird auch die Laserstrahleinrichtung 25 aktiviert, so dass der Laserstrahl 100 die beiden Bauteile 2, 3 im Bereich der Fügezone 11 derart erwärmt bzw. erhitzt, dass deren Material aufschmelzt. Dieses Aufschmelzen mittels der Laserstrahleinrichtung 25 erfolgt vorzugsweise solange, bis das Material bzw. der Werkstoff der beiden Bauteile 2, 3 über den gesamten Querschnitt der Bauteile 2, 3 im Bereich der Fügezone 11 verflüssigt sind. Anschließend wird die Laserstrahleinrichtung 25 mittels der Steuereinrichtung 30 abgeschaltet. Frühestens ab diesem Augenblick, bevorzugt jedoch ab einem Zeitpunkt, bei dem die Temperatur der beiden Bauteile 2, 3 im Bereich der Fügezone 11 eine Temperatur erreicht hat, die knapp oberhalb der Solidustemperatur liegt, wird mittels der Einrichtung 20 zur Erzeugung der Druckkraft F die Druckkraft F in die Bauteile 2, 3 eingeleitet, so dass die Bauteile 2, 3 im Bereich der Fügezone 11 mit der Druckkraft F gegeneinander gedrückt werden. Diese Druckkraft F wird solange aufrecht erhalten, bis das Material der beiden Bauteile 2, 3 in der Fügezone 11 unter Bildung der Laserschweißnaht 1, vorzugsweise vollständig, erstarrt ist.

Ergänzend wird erwähnt, dass die erforderliche Druckkraft F, ggf. deren Höhe in Abhängigkeit eines zeitlichen Verlaufs sowie die zeitliche Ansteuerung der Einrichtung 20 zum Erzeugen der Druckkraft F abhängig von der Bauteilegeometrie, von der Art des verwendeten Materials der beiden Bauteile 2, 3, von der Laserstrahleinrichtung 25 bzw. deren Betriebsmodus sowie ggf. anderen Parametern ist und ggf. mit Hilfe von Versuchen für den jeweiligen Anwendungsfall ermittelt werden müssen.

Es beispielsweise auch denkbar, Bauteile 2, 3 miteinander auf erfindungsgemäße Weise zu verschweißen, die nicht rotationssymmetrisch ausgebildet sind, sondern zum Beispiel als Bleche bzw. Platten ausgebildet sind.

## Patentansprüche

1. Verfahren zum Erzeugen einer Laserschweißnaht (1), bei dem in einer Fügezone (11) zweier Bauteile (2, 3) mittels eines Laserstrahls (100) das Material der beiden Bauteile (2, 3) aufgeschmolzen wird, welches danach unter Abkühlung zu der Laserschweißnaht (1) erstarrt, wobei der Laserstrahl (100) das Material der beiden Bauteile (2, 3) in der Fügezone (11) über deren Querschnitt zumindest nahezu vollständig aufschmelzt, und wobei auf die beiden Bauteile (2, 3) während des Bearbeitungsprozesses zumindest zeitweise eine Druckkraft (F) ausgeübt wird, die zumindest im Wesentlichen senkrecht zu der Ebene der Fügezone (11) bzw. senkrecht zum Laserstrahl (100) wirkt,
**dadurch gekennzeichnet,**
**dass** die Druckkraft (F) auf die Bauteile (2, 3) maximal in einem Zeitraum erfolgt, der zwischen dem vollständigen Aufschmelzen des Materials der beiden Bauteile (2, 3) in der Fügezone (11) und dessen Erstarrung, insbesondere vorzugsweise unmittelbar vor der Erstarrung, wirkt.

2. Verfahren nach Anspruch 1,
**dadurch gekennzeichnet,**
**dass** die Druckkraft (F) auf die beiden Bauteile (2, 3) bei einer Temperatur erzeugt wird, die nahe der Solidustemperatur des Materials der beiden Bauteile (2, 3) bzw. der Schweißnaht (1) liegt.

3. Verfahren nach Anspruch 1 oder 2,
**dadurch gekennzeichnet,**
**dass** das Einbringen der Druckkraft (F) auf die beiden Bauteile (2, 3) bei abgeschaltetem Laserstrahl (100) erfolgt.

4. Verfahren nach einem der Ansprüche 1 bis 3,
**dadurch gekennzeichnet,**
**dass** als Bauteile (2, 3) vorzugsweise solche Bauteile (2, 3) verwendet werden, die zumindest in der Fügezone (11) rotationssymmetrisch ausgebildet sind, und dass eine vorzugsweise konstante Relativbewegung zwischen dem Laserstrahl (100) und den Bauteilen (2, 3) in der Fügezone (11) zumindest während der Beaufschlagung der Fügezone (11) mit dem Laserstrahl (100) erzeugt wird.

5. Verfahren nach Anspruch 4,
**dadurch gekennzeichnet,**
**dass** die Wärmeeinleitung durch den Laserstrahl (100) in die Fügezone (11) über den Umfang der Bauteile (2, 3) zumindest nahezu gleichmäßig bzw. gleichzeitig erfolgt.

6. Vorrichtung (10) zum Erzeugen einer Laserschweißnaht (1) nach einem Verfahren nach einem der Ansprüche 1 bis 5, mit einer Laserstrahleinrichtung (25) zur Erzeugung eines Laserstrahls (100) in einer Fügezone (11) zweier Bauteile (2, 3) und einer Einrichtung (20) zur Erzeugung einer Druckkraft (F) in einer Ebene senkrecht zur Fügezone (11) der beiden Bauteile (2, 3), **gekennzeichnet durch** eine über eine Leitung (26) mit der Laserstrahleinrichtung (25) und über eine weitere Leitung (27) mit der Einrichtung (20) zur Erzeugung einer Druckkraft (F) verbundene Steuereinrichtung (30) zum Ausüben der Druckkraft (F) auf die Bauteile (2, 3) maximal in einem Zeitraum, der zwischen dem vollständigen Aufschmelzen des Materials der beiden Bauteile (2, 3) in der Fügezone (11) und dessen Erstarrung, insbesondere vorzugsweise unmittelbar vor der Erstarrung, liegt.

7. Vorrichtung nach Anspruch 6,
**dadurch gekennzeichnet,**
**dass** eine Dreheinrichtung (15) für die beiden Bauteile (2, 3) vorgesehen ist, die die beiden Bauteile (2, 3) in einer gemeinsamen Längsachse (5), die senkrecht zur Fügezone (11) verläuft, dreht.

8. Vorrichtung nach Anspruch 7,
**dadurch gekennzeichnet,**
**dass** die Einrichtung (20) zur Erzeugung der Druckkraft (F) wenigstens eines der beiden Bauteile (2, 3) auf der der Fügezone (11) abgewandten Seite der Bauteile (2, 3) mit der Druckkraft (F) beaufschlagt.

9. Vorrichtung nach einem der Ansprüche 6 bis 8,
**dadurch gekennzeichnet,**
**dass** die Einrichtung (20) zur Erzeugung der Druckkraft (F) und die Laserstrahleinrichtung (25) miteinander wirkverbunden sind, derart, dass die Einrichtung (20) zur Erzeugung der Druckkraft (F) nur bei deaktivierter Laserstrahleinrichtung (25) arbeitet.

## Claims

1. Method for producing a laser-welded seam (1), in which, in a joining zone (11) of two components (2, 3), the material of the two components (2, 3) is melted by means of a laser beam (100) and then solidifies during cooling to form the laser-welded seam (1), wherein the laser beam (100) melts the material of the two components (2, 3) in the joining zone (11) at least almost completely over the cross section thereof, and wherein a compressive force (F) is exerted on the two components (2, 3) at least for a time during the machining process, and acts at least substantially perpendicularly to the plane of the joining zone (11) and perpendicularly to the laser beam (100), **characterized**
**in that** the compressive force (F) on the components (2, 3) is applied at most within a time period that lasts from when the material of the two components (2, 3) in the joining zone (11) is melted completely and when it solidifies, in particular preferably just before it solidifies.

2. Method according to Claim 1, **characterized in that** the compressive force (F) on the two components (2, 3) is produced at a temperature that is close to the solidus temperature of the material of the two components (2, 3) or of the welded seam (1).

3. Method according to Claim 1 or 2, **characterized in that** the compressive force (F) is first applied to the two components (2, 3) with the laser beam (100) switched off.

4. Method according to one of Claims 1 to 3, **characterized in that** preferably components (2, 3) that are formed rotationally symmetrically, at least in the joining zone (11), are used as components (2, 3), and **in that** a preferably constant relative movement is produced between the laser beam (100) and the components (2, 3) in the joining zone (11), at least during the exposure of the joining zone (11) to the laser beam (100).

5. Method according to Claim 4, **characterized in that** the introduction of heat into the joining zone (11) by the laser beam (100) takes place at least almost uniformly and simultaneously over the circumference of the components (2, 3).

6. Apparatus (10) for creating a laser-welded seam (1) by a method according to one of Claims 1 to 5, comprising a laser beam device (25) for producing a laser beam (100) in a joining zone (11) of two components (2, 3) and a device (20) for producing a compressive force (F) in a plane perpendicular to the joining zone (11) of the two components (2, 3), **characterized by** a control device (30), which is connected to the laser beam device (25) by way of a line (26) and is connected to the device (20) for producing a compressive force (F) by way of a further line (27), for exerting the compressive force (F) on the components (2, 3) at most within a time period that lies between when the material of the two components (2, 3) in the joining zone (11) is melted completely and when it solidifies, in particular preferably just before it solidifies.

7. Apparatus according to Claim 6, **characterized in that** a rotating device (15), which rotates the two components (2, 3) in a common longitudinal axis (5), which runs perpendicularly to the joining zone (11), is provided for the two components (2, 3).

8. Apparatus according to Claim 7, **characterized in that** the device (20) for producing the compressive force (F) exposes at least one of the two components (2, 3) to the compressive force (F) on the side of the components (2, 3) that is facing away from the joining zone (11).

9. Apparatus according to one of Claims 6 to 8, **characterized in that** the device (20) for producing the compressive force (F) and the laser beam device (25) are operatively connected to one another in such a way that the device (20) for producing the compressive force (F) only operates when the laser beam device (25) is deactivated.

## Revendications

1. Procédé destiné à la production d'un cordon de soudure au laser (1), dans lequel, dans une zone de joint (11) de deux composants (2, 3), le matériau des deux composants (2, 3) est fondu au moyen d'un faisceau laser (100), et est ensuite rigidifié par refroidissement pour former le cordon de soudure au laser (1), le faisceau laser (100) faisant au moins pratiquement totalement fondre le matériau des deux composants (2, 3) dans la zone de joint (11) sur sa section transversale, et au moins temporairement une force de pression (F) étant exercée sur les deux composants (2, 3) pendant le processus de traitement, laquelle agit au moins essentiellement perpendiculairement au plan de la zone de joint (11) ou perpendiculairement au faisceau laser (100), **caractérisé en ce que**
la force de pression (F) sur les deux composants (2, 3) s'exerce au maximum dans un intervalle de temps qui agit entre la fusion complète du matériau des deux composants (2, 3) dans la zone de joint (11) et sa rigidification, en particulier de préférence immédiatement avant la rigidification.

2. Procédé selon la revendication 1,
**caractérisé en ce que**
la force de pression (F) sur les deux composants (2, 3) est produite à une température qui se situe à proximité de la température de solidus du matériau des deux composants (2, 3) ou du cordon de soudure (1).

3. Procédé selon la revendication 1 ou 2,
**caractérisé en ce que**
l'application de la force de pression (F) sur les deux composants (2, 3) a lieu lorsque le faisceau laser (100) est coupé.

4. Procédé selon l'une quelconque des revendications 1 à 3,
**caractérisé en ce que**
l'on utilise en tant que composants (2, 3) de préférence des composants (2, 3) qui sont réalisés avec une symétrie de révolution au moins dans la zone de joint (11), et **en ce qu'**un mouvement relatif de préférence constant entre le faisceau laser (100) et les composants (2, 3) dans la zone de joint (11) est produit au moins pendant la sollicitation de la zone de joint (11) avec le faisceau laser (100).

5. Procédé selon la revendication 4,
**caractérisé en ce que**
l'apport de chaleur par le faisceau laser (100) dans la zone de joint (11) sur la périphérie des composants (2, 3) s'effectue au moins pratiquement uniformément ou simultanément.

6. Dispositif (10) pour produire un cordon de soudure au laser (1) selon un procédé selon l'une quelconque des revendications 1 à 5, comprenant un dispositif de faisceau laser (25) pour produire un faisceau laser (100) dans une zone de joint (11) de deux composants (2, 3) et un dispositif (20) pour produire une force de pression (F) dans un plan perpendiculairement à la zone de joint (11) des deux composants (2, 3), **caractérisé par** un dispositif de commande (30) connecté par le biais d'une conduite (26) au dispositif de faisceau laser (25) et par le biais d'une conduite supplémentaire (27) au dispositif (20) pour produire une force de pression (F), pour exercer la force de pression (F) sur les composants (2, 3) au maximum dans un intervalle de temps qui se situe entre la fusion complète du matériau des deux composants (2, 3) dans la zone de joint (11) et sa rigidification, en particulier de préférence immédiatement avant la rigidification.

7. Dispositif selon la revendication 6,
**caractérisé en ce**
**qu'**un dispositif rotatif (15) est prévu pour les deux composants (2, 3), lequel fait tourner les deux composants (2, 3) suivant un axe longitudinal commun (5) qui s'étend perpendiculairement à la zone de joint (11).

8. Dispositif selon la revendication 7,
**caractérisé en ce que**
le dispositif (20) pour produire la force de pression (F) sollicite au moins l'un des deux composants (2, 3) du côté des composants (2, 3) opposé à la zone de joint (11) avec la force de pression (F).

9. Dispositif selon l'une quelconque des revendications 6 à 8,
**caractérisé en ce que**
le dispositif (20) pour produire la force de pression (F) et le dispositif de faisceau laser (25) sont en liaison fonctionnelle l'un avec l'autre de telle sorte que le dispositif (20) pour produire la force de pression (F) ne fonctionne que lorsque le dispositif de faisceau laser (25) est désactivé.
